# FASCICULE DE BREVET EUROPEEN

(11) **EP 1 865 695 B1**
(45) Date de publication et mention de la délivrance du brevet: **27.04.2011**
(21) Numéro de dépôt: 07109658.0
(22) Date de dépôt: 05.06.2007
(51) Int. Cl.: H04M 3/38, H04L 9/32, H04L 9/06

(54) **Mémorisation de flux audio d'une conversation**
Telefongespräch-Aufzeichnung
Recording of an audio stream of a telephone conversation

(30) Priorité: 08.06.2006 FR 0652055
(43) Date de publication de la demande: 12.12.2007
(73) Titulaire: Alcatel Lucent, 75008 Paris (FR)
(72) Inventeur: Olivier, François, 67115 Plobsheim (FR); Colin, Jean-Michel, 67000 Strasbourg (FR)
(74) Mandataire: Sciaux, Edmond

(56) Documents cités:
- EP-A2- 1 271 905
- WO-A2-02/054704
- FR-A1- 2 828 965
- US-A1- 2004 259 529
- US-B1- 6 529 602

## Description

L'invention concerne le domaine des télécommunications audio, et en particulier le domaine de l'enregistrement du contenu d'une conversation audio.

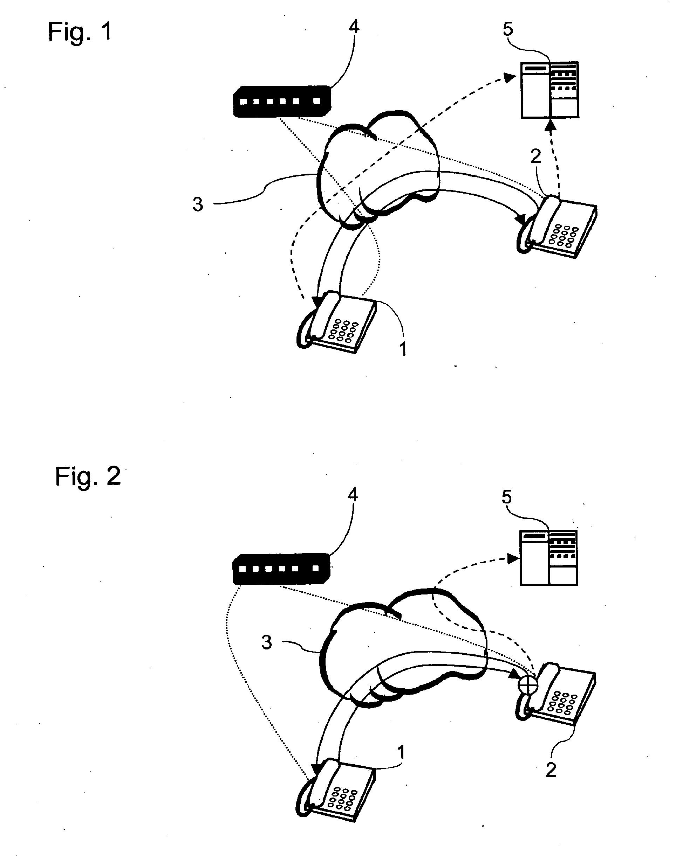

La figure 1 illustre un premier procédé d'enregistrement d'une conversation audio entre les terminaux 1 et 2. Selon ce procédé, deux flux audio sont transmis par l'intermédiaire du réseau de télécommunication 3 respectivement du terminal 1 vers le terminal 2 et du terminal 2 vers le terminal 1. Un serveur d'appel 4 gère un protocole de signalisation de communication entre les terminaux 1 et 2. Les flux audio transmis entre les terminaux 1 et 2 sont également transmis par chaque terminal 1 ou 2 vers un serveur d'enregistrement 5 par l'intermédiaire du réseau 4. Le serveur d'enregistrement 5 reconstitue la conversation en additionnant les deux flux audio reçus.
La figure 2 illustre un second procédé d'enregistrement d'une conversation audio entre les terminaux 1 et 2. Comme dans l'exemple de la figure 1, deux flux audio sont transmis par l'intermédiaire du réseau 3 entre les terminaux 1 et 2. Un serveur d'appel 4 gère un protocole de signalisation de communication entre les terminaux 1 et 2. Le terminal 2 additionne le flux audio reçu du terminal 1 au flux audio émis vers ce terminal 1. Le terminal 2 transmet l'addition des flux audio à un serveur d'enregistrement 5, qui mémorise la conversation ainsi reconstituée.

Les documents US 2004/259.529, US 6.343.117, et EP 1.271.905 décrivent des procédés de mémorisation d'au moins un flux audio d'une conversation entre plusieurs terminaux connectés par l'intermédiaire d'un réseau, comprenant les étapes consistant à :
- authentifier un premier terminal parmi lesdits terminaux ou son utilisateur ;
- signer cryptographiquement un flux audio qu'il émet ou reçoit ;
- et mémoriser le flux audio signé.

Ces procédés d'enregistrement de conversations présentent des inconvénients. En effet, les enregistrements réalisés n'ont qu'une valeur de preuve limitée du fait de l'incertitude concernant une possible altération entre l'émission et la réception d'un flux audio, concernant l'identité des utilisateurs ou encore concernant les paramètres de transmission de la conversation dans le réseau. Par ailleurs, la conversation mémorisée ne permet pas de déterminer des paramètres des terminaux influant sur les flux audio, tels que le volume d'écoute sur un terminal ou l'utilisation du haut-parleur du terminal.

L'invention vise à résoudre un ou plusieurs de ces inconvénients. L'invention porte ainsi sur un procédé de mémorisation d'au moins un flux audio d'une conversation entre plusieurs terminaux connectés par l'intermédiaire d'un réseau, comprenant les étapes consistant à :
- authentifier un premier terminal parmi lesdits terminaux ou son utilisateur ;
- signer cryptographiquement au niveau du premier terminal un flux audio qu'il émet ou reçoit ;
- mémoriser le flux audio signé ;
**caractérisé** en ce qu'il consiste en outre à :
- signer cryptographiquement des informations de signalisation de la conversation ;
- et mémoriser les informations de signalisation signées.

Selon une variante, le procédé comprend les étapes consistant à :
- signer cryptographiquement des paramètres du premier terminal modifiant le flux audio reçu ou à émettre;
- mémoriser lesdits paramètres signés.

Selon une autre variante, le procédé comprend les étapes consistant à :
- transmettre à un module de mémorisation un ou plusieurs types de données parmi lesdits paramètres signés, ledit flux audio signé ou lesdites informations de signalisation signées ;
- mémoriser ledit type de données dans le module de mémorisation.

Selon encore une variante, ledit flux audio signé est un flux audio composite comprenant le flux audio émis et le flux audio reçu par le premier terminal.

Selon une autre variante, ledit premier terminal authentifie un second terminal ou son utilisateur avec lequel il est en conversation et signe des données d'authentification de ce second terminal.

L'invention porte également sur un terminal destiné à échanger des flux audio pour former une conversation avec au moins un autre terminal, comprenant :
- un module d'échange de flux audio apte à être connecté à un réseau de télécommunication ;
- un module de réception d'informations de signalisation d'une conversation correspondant auxdits flux audio ;
- un module d'authentification (35) du terminal ou de son utilisateur ;
- un module de signature cryptographique (33) apte à signer un flux audio reçu ou émis par le module d'échange ;
caractérisé en ce qu'il comprend en outre une interface de réglage de paramètres modifiant le flux audio reçu ou à émettre par le module d'échange ; et en ce que le module de signature (33) est apte à signer lesdits paramètres utilisés durant l'émission ou la réception d'un flux audio.

Selon une variante, le terminal comprend un module de transmission apte à être connecté audit réseau de télécommunication et apte à émettre lesdits paramètres signés ou ledit flux audio signé.

Selon une autre variante, le module d'authentification est apte à authentifier un autre terminal ou l'utilisateur de cet autre terminal et apte à signer des données d'authentification de ce second terminal.

L'invention porte en outre sur un système de mémorisation d'au moins un flux audio d'une conversation entre plusieurs terminaux, comprenant :
- un premier terminal comprenant :
   - un module d'échange de flux audio apte à être connecté à un réseau de télécommunication ;
   - un module d'authentification du terminal ou de son utilisateur ;
   - un module de signature cryptographique apte à signer un flux audio reçu ou émis par le module d'échange ;
- un second terminal apte à être connecté au premier terminal par l'intermédiaire d'un réseau ;
caractérisé en ce qu'il comporte en outre un serveur d'appel apte à gérer la signalisation entre les premier et second terminaux et comprenant un module de signature cryptographique apte à signer les informations de signalisation.

Selon une variante, le système comprend un module de réception et de mémorisation du flux audio signé ou desdites informations de signalisation signées, apte à être connecté au premier terminal et au serveur d'appel.

L'invention porte par ailleurs sur un dispositif de stockage mémorisant un programme, ledit programme comprenant des instructions adaptées pour réaliser les étapes du procédé selon l'une des revendications 1 à 5.

D'autres caractéristiques et avantages de l'invention ressortiront clairement de la description qui en est faite ci-après, à titre indicatif et nullement limitatif, en référence aux dessins annexés, dans lesquels :
- les figures 1 et 2 décrites précédemment illustrent schématiquement des procédés d'enregistrement de conversations audio selon l'état de la technique ;
- la figure 3 illustre schématiquement un premier exemple de système mettant en oeuvre l'invention ;
- la figure 4 illustre schématiquement un second exemple de système mettant en oeuvre l'invention.

L'invention propose d'authentifier un premier terminal ou son utilisateur, de signer cryptographiquement un flux audio au niveau de ce terminal, de signer cryptographiquement des informations de signalisation de la conversation de ce terminal avec un autre terminal et de mémoriser le flux audio signé ainsi que les informations de signalisation signées.

Ainsi, les informations mémorisées fournissent une preuve avec un degré de fiabilité élevée, concernant un flux audio reçu ou émis par un terminal, concernant l'identité de son utilisateur ou du terminal utilisé et concernant l'établissement et la gestion des communications.

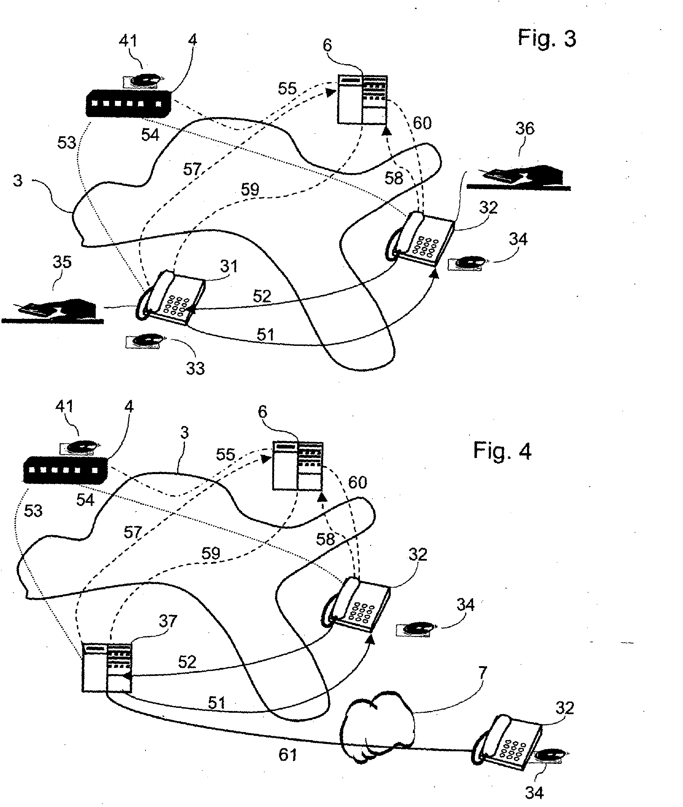

La figure 3 illustre schématiquement un premier exemple de mise en oeuvre de l'invention. Le procédé mis en oeuvre vise à mémoriser au moins un flux audio d'une conversation entre des terminaux 31 et 32 connectés par l'intermédiaire d'un réseau 3. Le flux audio 51 est transmis du terminal 31 vers le terminal 32, le flux audio 52 est transmis du terminal 32 vers le terminal 31. Des informations de signalisation de la conversation 53 et 54 sont échangées par un serveur d'appel 4 respectivement avec les terminaux 31 et 32.

Dans le procédé selon l'invention, le terminal 31 ou son utilisateur est authentifié. Le flux audio émis 51 ou reçu 52 par le terminal 31 est signé cryptographiquement au niveau de ce terminal par tout moyen approprié. Les informations de signalisation 53 et 54 de la conversation sont signées cryptographiquement. Le flux audio signé ainsi que les informations de signalisation signées sont mémorisés. On peut ainsi certifier que le terminal 31 ou son utilisateur a émis ou reçu un flux audio dont le contenu est également certifié.

A cette fin, le terminal 31 est muni d'un module d'échange de flux audio apte à être connecté au réseau 3, ce module étant connu en lui-même de l'homme du métier. Le terminal 31 est également muni d'un module de réception d'informations de signalisation de la conversation correspondant auxdits flux audio. Le terminal 31 est en outre muni d'un module de certification 33 comprenant un module de signature cryptographique apte à signer le flux audio reçu ou émis par le module d'échange. Le terminal 31 est en outre muni d'un module d'authentification 35 de l'utilisateur du terminal.

Le flux audio reçu et le flux audio émis par un terminal peuvent être signés indépendamment. Un seul de ces flux peut également être signé. Un flux audio composite incluant le flux audio reçu et le flux audio émis peut être signé.

Avantageusement, le terminal 31 est muni d'une interface de réglage de paramètres modifiant le flux audio reçu ou à émettre par le module d'échange. Le module de signature du terminal est alors apte à signer lesdits paramètres utilisés durant l'émission ou la réception d'un flux audio. Lors d'une consultation ultérieure de la conversation, on pourra donc en outre déterminer quels étaient les paramètres du terminal utilisés, tels que le volume de restitution du flux audio reçu, l'utilisation d'un haut-parleur ou la désactivation du microphone. L'invention permet donc en outre de mémoriser des éléments de preuve permettant d'évaluer la perception d'un flux audio par un des utilisateurs des terminaux.

Avantageusement, le module d'authentification du terminal 31 est apte à authentifier un autre terminal ou son utilisateur et apte à signer des données d'authentification qui en sont issues. Les preuves concernant l'origine ou la destination des flux audio sont ainsi particulièrement fortes.

Le terminal 32 présente les mêmes fonctionnalités que le terminal 31. Le terminal 32 est à cette fin muni d'un module de certification 34 comprenant un module de signature cryptographique apte à signer le flux audio reçu ou émis par son module d'échange. Le terminal 32 est en outre muni d'un module d'authentification 36 de l'utilisateur du terminal.

Dans l'exemple de la figure 3, les utilisateurs des terminaux 31 et 32 sont authentifiés respectivement par l'intermédiaire de dispositifs de reconnaissance biométriques 35 et 36 connectés aux terminaux 31 et 32. Bien qu'on ait illustré des dispositifs de reconnaissance d'empreintes, on peut également envisager d'autres modes d'authentification de l'utilisateur, tels qu'une authentification par lecture de carte à puce, par reconnaissance vocale ou par reconnaissance faciale. On pourrait également envisager de détecter la présence ou l'absence d'un utilisateur du terminal durant la conversation.

L'authentification peut être réalisée par l'intermédiaire de moyens logiciels disponibles dans le commerce tels que ceux diffusés sous les références Kerberos, Radius ou 802.1 x.

Avantageusement, le serveur d'appel 4 présente un module de certification 41 muni d'un module de signature cryptographique. Le module de signature cryptographique signe les informations de signalisation 53 et 54. Les informations de signalisation comprennent notamment la date et l'horaire de la conversation, ainsi que des informations correspondant au protocole de signalisation. On peut également envisager la mémorisation de la date et de l'heure locale, du lieu de connexion du terminal et de l'heure universelle de la conversation.

Avantageusement, un système mettant en oeuvre l'invention comprend un serveur de mémorisation 6 destiné à recevoir et mémoriser les différentes informations signées fournies par un terminal ou le serveur d'appel 4. Le serveur de mémorisation 6 peut notamment recevoir des flux audio signés 57 ou 58, des paramètres audio signés 59 ou 60 ou des informations de signalisation signées 55.

Le serveur de mémorisation 6 peut être géré par une autorité de confiance auprès de qui les éléments signés sont requis lorsqu'un élément de preuve relatif à une conversation est requis. Avantageusement, le module de certification 41 comprend un module de transmission apte à transmettre les informations de signalisation signées 55 au serveur de mémorisation 6 par l'intermédiaire du réseau 3.

Un serveur, par exemple le serveur de mémorisation 6, peut être utilisé pour reconstituer une conversation à partir de différents flux audio signés reçus.

Un serveur, par exemple le serveur de mémorisation 6, peut être utilisé pour diffuser un module d'authentification ou un module de signature cryptographique tels que détaillés auparavant. Ainsi, des terminaux non munis au préalable des fonctions mettant en oeuvre l'invention pourront être mis à jour par téléchargement de ces modules depuis un tel serveur.

On peut également envisager que les fonctions requises soient incluses lors de l'assemblage du terminal. La gestion des fonctions de signature et de mémorisation pourrait être intégrée en standard à un protocole existant de gestion d'échanges tel que SlP.

La figure 4 illustre un second exemple de mise en oeuvre de l'invention dans lequel le terminal 31 se connecte au réseau 3 par l'intermédiaire d'un réseau distinct 7 et d'une passerelle 37. Les flux audio, les informations de signalisation, ainsi que les données signées émises par le terminal 31 transitent donc par le réseau 7, ces flux étant illustrés par la référence 61 sur la figure 4.

Un dispositif de stockage tel qu'un CD-ROM ou un disque optique peut mémoriser un programme destiné à réaliser les fonctions requises lorsqu'il est exécuté par un terminal. On peut notamment prévoir qu'un même support mémorise l'ensemble des fonctions requises soit pour l'exécution sur un terminal, soit pour l'exécution sur un serveur d'appel.

L'invention peut notamment être appliquée avec un réseau 3 formé d'un réseau local ou incluant un réseau public commuté.

L'invention peut notamment présenter des applications pour générer des moyens de preuve pour des services de police, pour l'administration judiciaire ou pour des organisation devant conserver des minutes de leurs conversations.

## Revendications

1. Procédé de mémorisation d'au moins un flux audio d'une conversation entre plusieurs terminaux (31,32) connectés par l'intermédiaire d'un réseau (3), comprenant les étapes consistant à :
- authentifier un premier terminal (31) parmi lesdits terminaux ou son utilisateur ;
- signer cryptographiquement au niveau du premier terminal un flux audio (51, 52) qu'il émet ou reçoit ;
- et mémoriser le flux audio signé (57)) ;
**caractérisé en ce qu'**il consiste en outre à :
- signer cryptographiquement des informations de signalisation (53,
- 54) de la conversation ;
- et mémoriser les informations de signalisation signées (55).

2. Procédé de mémorisation selon la revendication 1, comprenant les étapes consistant à :
- signer cryptographiquement des paramètres du premier terminal modifiant le flux audio reçu ou à émettre;
- mémoriser lesdits paramètres signés (59).

3. Procédé de mémorisation selon la revendication 2, comprenant les étapes consistant à :
- transmettre à un module de mémorisation (6) un ou plusieurs types de données parmi lesdits paramètres signés, ledit flux audio signé ou lesdites informations de signalisation signées ;
- mémoriser ledit type de données dans le module de mémorisation (6).

4. Procédé de mémorisation selon l'une quelconque des revendications précédentes, dans lequel ledit flux audio signé est un flux audio composite comprenant le flux audio émis et le flux audio reçu par le premier terminal.

5. Procédé selon l'une quelconque des revendications précédentes, dans lequel ledit premier terminal (31) authentifie un second terminal (32) ou son utilisateur avec lequel il est en conversation et signe des données d'authentification de ce second terminal.

6. Terminal (31) destiné à échanger des flux audio pour former une conversation avec au moins un autre terminal, comprenant :
- un module d'échange de flux audio apte à être connecté à un réseau de télécommunication :
- un module de réception d'informations de signalisation d'une conversation correspondant auxdits flux audio ;
- un module d'authentification (35) du terminal ou de son utilisateur ;
- un module de signature cryptographique (33) apte à signer un flux audio reçu ou émis par le module d'échange ;
**caractérisé en ce qu'**il comprend en outre une interface de réglage de paramètres modifiant le flux audio reçu ou à émettre par le module d'échange ; et **en ce que** le module de signature (33) est apte à signer lesdits paramètres utilisés durant l'émission ou la réception d'un flux audio.

7. Terminal selon la revendication 6 comprenant un module de transmission apte à être connecté audit réseau de télécommunication et apte à émettre lesdits paramètres signés ou ledit flux audio signé.

8. Terminal selon l'une quelconque des revendications 6 à 7, dans lequel le module d'authentification (35) est apte à authentifier un autre terminal ou l'utilisateur de cet autre terminal et apte à signer des données d'authentification de ce second terminal.

9. Système de mémorisation d'au moins un flux audio d'une conversation entre plusieurs terminaux, comprenant :
- un premier terminal comprenant :
- un module d'échange de flux audio apte à être connecté à un réseau de télécommunication,
- un module d'authentification du terminal ou de son utilisateur ;
- un module de signature cryptographique apte à signer un flux audio reçu ou émis par le module d'échange ;
- un second terminal apte à être connecté au premier terminal par l'intermédiaire d'un réseau ;
**caractérisé en ce qu'**il comporte en outre un serveur d'appel apte à gérer la signalisation entre les premier et second terminaux et comprenant un module de signature cryptographique apte à signer les informations de signalisation.

10. Système de mémorisation selon la revendication 9, comprenant un module de réception et de mémorisation du flux audio signé ou desdites informations de signalisation signées, apte à être connecté au premier terminal et au serveur d'appel.

11. Dispositif de stockage mémorisant un programme, ledit programme comprenant des instructions adaptées pour réaliser les étapes selon l'une des revendications 1 à 5.

## Claims

1. A method for saving at least one audio stream of a conversation between multiple terminals (31, 32) connected by means of a network (3), comprising the steps consisting of:
- authenticating a first terminal (31) from among said terminals or its user;
- cryptographically signing, within the first terminal, an audio stream (51, 52) that it is emitting or receiving;
- and saving the signed audio stream (57));
**characterized in that** it further consists of:
- cryptographically signing signaling information (53, - 54) of the conversation;
- and saving the signed signaling information (55).

2. A method for saving according to claim 1, comprising the steps consisting of:
- cryptographically signing parameters of the first terminal altering the audio stream received or to be sent;
- saving said signed parameters (59).

3. A method for saving according to claim 2, comprising the steps consisting of:
- transmitting to a saving module (6) one or more types of data among said signed parameters, said signed audio stream or said signed signaling information
- saving said type of data within the saving module (6).

4. A method for saving according to any one of the preceding claims, wherein said signed audio stream is a composite audio stream comprising the audio stream sent and the audio stream received by the first terminal.

5. A method according to any one of the preceding claims, wherein said first terminal (31) authenticates a second terminal (32) or its user with which it is engaged in conversation and signs authentication data of that second terminal.

6. A terminal (31) intended to exchange audio streams in order to form a conversation with at least one other terminal, comprising:
- an audio stream exchange module capable of being connected to a telecommunication network;
- a module for receiving signaling information of a conversation corresponding to said audio streams;
- a module (35) for authenticating the terminal or its user;
- a cryptographic signature module (33) capable of signing an audio stream received or emitted by the exchange module;
**characterized in that** it further comprises an interface for setting parameters altering the audio stream received or to be sent by the exchange module; and **in that** the signature module (33) is capable of signing said parameters used during the sending or receiving of an audio stream.

7. A terminal according to claim 6, comprising a transmission module capable of being connected to said telecommunication network and capable of sending said signed parameters or said signed audio stream.

8. A terminal according to any of the claims 6 to 7, wherein the authentication module (35) is capable of authenticating another terminal or the user of that other terminal is capable of signing authentication data of that second terminal.

9. A system for saving at least one audio stream of a conversation between multiple terminals, comprising:
- a first terminal comprising:
- an audio stream exchange module capable of being connected to a telecommunication network;
- a module for authenticating the terminal or its user;
- a cryptographic signature module capable of signing an audio stream received or emitted by the exchange module;
- a second terminal capable of being connected to the first terminal by means of a network;
**characterized in that** it further comprises a call server capable of managing the signaling between the first and second terminals and comprising a cryptographic signature module capable of signing the signaling information.

10. A system for saving according to claim 9, comprising a module for receiving and saving the signed audio stream or said signed signaling information, capable of being connected to the first terminal and to the call server.

11. A storage device saving a program, said program comprising instructions suitable for carrying out steps according to one of the claims 1 to 5.

## Patentansprüche

1. Verfahren zur Speicherung mindestens eines Audiodatenstroms eines Gesprächs zwischen mehreren Endgeräten (31, 32), welche über ein Netzwerk (3) miteinander verbunden sind, wobei das Verfahren die folgenden Schritte umfasst:
- Authentifizieren eines ersten Endgeräts (31) unter den besagten Endgeräten oder dessen Benutzers;
- kryptografisches Signieren, an dem ersten Endgerät, eines von ihm gesendeten oder empfangenen Audiodatenstroms (51, 52);
- und Speichern des signierten Audiodatenstroms (57);
**dadurch gekennzeichnet, dass** das Verfahren weiterhin die folgenden Schritte umfasst:
- kryptografisches Signieren der Signalisierungsinformationen (53, 54) des Gesprächs;
- und Speichern der signierten Signalisierungsinformationen (55).

2. Verfahren zur Speicherung nach Anspruch 1, die folgenden Schritte umfassend:
- kryptografisches Signieren der Parameter des ersten Endgeräts, welche den empfangenen oder zu sendenden Audiodatenstrom ändern;
- Speichern der besagten signierten Parameter (59).

3. Verfahren zur Speicherung nach Anspruch 2, die folgenden Schritte umfassend:
- Übertragen, an ein Speichermodul (6), eines oder mehrerer Datentyp(s)(en) unter den besagten signierten Parametern, des besagten signierten Audiodatenstroms oder der besagten signierten Signalisierungsinformationen;
- Speichern des besagten Datentyps im Speichermodul (6).

4. Verfahren zur Speicherung nach einem beliebigen der vorstehenden Ansprüche, wobei der besagte signierte Audiodatenstrom ein gemischter Audiodatenstrom bestehend aus dem von dem ersten Endgerät gesendeten und empfangenen Audiodatenströmen ist.

5. Verfahren nach einem beliebigen der vorstehenden Ansprüche, wobei das besagte erste Endgerät (31) ein zweites Endgerät (32) oder dessen Benutzer, mit welchem es spricht, authentifiziert und Authentifizierungsdaten dieses zweiten Endgeräts signiert.

6. Endgerät (31) für den Austausch von Audiodatenströmen zum Bilden eines Gesprächs mit mindestens einem anderen Endgerät, umfassend:
- Ein Modul für den Austausch von Audiodatenströmen, welches für den Anschluss an ein Telekommunikationsnetzwerk ausgelegt ist;
- ein Modul für den Empfang von Signalisierungsinformationen eines den besagten Audiodatenströmen entsprechenden Gesprächs;
- ein Modul für die Authentifizierung (35) des Endgeräts oder dessen Benutzers;
- ein Modul für die kryptografische Signierung (33), welches für die Signierung eines von dem Austauschmodul empfangenen oder gesendeten Audiodatenstroms ausgelegt ist;
**dadurch gekennzeichnet, dass** es weiterhin eine Schnittstelle für das Einstellen von Parametern, welche den von dem Austauschmodul empfangenen oder zu sendenden Audiodatenstrom ändern, umfasst; und dass das Signaturmodul (33) für das Signieren der besagten während des Sendens oder Empfangens eines Audiodatenstroms verwendeten Parameter ausgelegt ist.

7. Endgerät nach Anspruch 6, umfassend ein Übertragungsmodul, welches für den Anschluss an das besagte Telekommunikationsnetzwerk und für das Senden der besagten signierten Parameter oder des besagten signierten Audiodatenstroms ausgelegt ist.

8. Endgerät nach einem beliebigen der Ansprüche 6 bis 7, wobei das Authentifizierungsmodul (35) für das Authentifizieren eines anderen Endgeräts oder des Benutzers dieses anderen Endgeräts und für das Signieren der Authentifizierungsdaten dieses zweiten Endgeräts ausgelegt ist.

9. System zum Speichern mindestens eines Audiodatenstroms eines Gesprächs zwischen mehreren Endgeräten, umfassend:
- Ein erstes Endgerät mit:
- Einem Modul für den Austausch von Audiodatenströmen, welches für den Anschluss an ein Telekommunikationsnetzwerk ausgelegt ist;
- einem Modul für die Authentifizierung des Endgeräts oder dessen Benutzers;
- einem Modul für die kryptografische Signierung, welches für die Signierung eines von dem Austauschmodul empfangenen oder gesendeten Audiodatenstroms ausgelegt ist;
- Ein zweites Endgerät, welches für den Anschluss an das erste Endgerät ausgelegt ist;
**dadurch gekennzeichnet, dass** es weiterhin einen Anrufserver umfasst, welcher für die Verwaltung der Signalisierung zwischen dem ersten und dem zweiten Endgerät ausgelegt ist und ein Modul für die kryptografische Signatur umfasst, welches für das Signieren des Signalisierungsinformationen ausgelegt ist.

10. Speichersystem nach Anspruch 9, mit einem Modul für den Empfang und die Speicherung des signierten Audiodatenstroms oder der besagten signierten Signalisierungsinformationen, welches für den Anschluss an das erste Endgerät und an den Anrufserver ausgelegt ist.

11. Speichervorrichtung für die Speicherung eines Programms, wobei das besagte Programm geeignete Befehle enthält, um die Schritte gemäß einem der Ansprüche 1 bis 5 durchzuführen.
